(19) Europäisches Patentamt

European Patent Office

Office européen des brevets

(11) **EP 1 727 381 A1**

(12) **EUROPEAN PATENT APPLICATION**

(43) Date of publication:
**29.11.2006 Bulletin 2006/48**

(51) Int Cl.:
***H04Q 7/36*** (2006.01)

(21) Application number: **05425354.7**

(22) Date of filing: **23.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(71) Applicant: **Siemens S.p.A.**<br>**20126 Milano (IT)** | (72) Inventors:<br>• **Caione, Salvatore**<br>  **67031 L'Aquila (IT)**<br>• **D'Alessandro, Claudio Roberto**<br>  **20017 Rho (IT)** |

(54) **Method and system for analysing best server conditions within cells of a cellular communication network, and computer program product therefor**

(57)    In a cell (B) of a cellular communication network served by a given Radio Base Station (10B), islands (A1, A2, A3) may be produced by at least one other interfering Radio Base Station (10A) as a result of the at least one other Radio Base Station (A) representing in these islands (A1, A2, A3) the best server for at least one given operational parameter of the network. These islands (A1, A2, A3) are detected by:
- partitioning the area of the cellular communication network exposed to the presence of such islands (A1, A2, A3) in a plurality of elementary surfaces or pixels;
- measuring (102) the value of the at least one parameter over these pixels, wherein for each pixel either the given Radio Base Station (10B) or the at least one other Radio Base Station (10A) is the best server, and
- subjecting the pixels, wherein the at least one other Radio Base Station (A) is the best server to an aggregation process (102) to produce aggregations representative of the islands (A1, A2, A3).

FIG 1

**Description**

Field of the invention

The invention relates to a cellular communication networks.

The invention was devised by paying specific attention to the problem of properly identifying (and designing) best server conditions in cellular communication networks.

Description of the related art

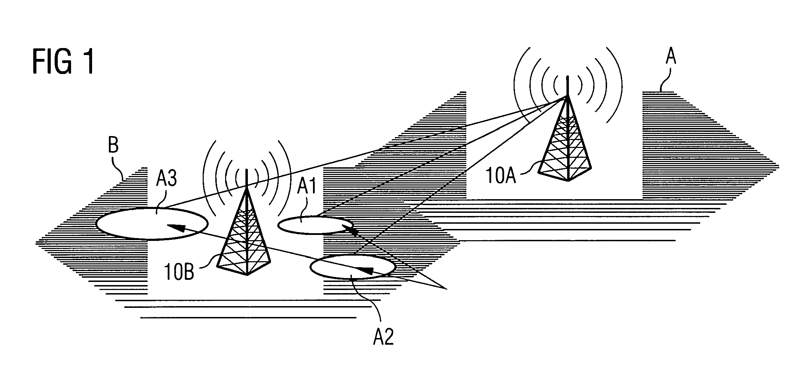

A situation likely to occur in cellular communication networks is schematically depicted in figure 1.

Specifically, figure 1 shows two best server areas (Best Server area A and Best Server area B) in a cellular communication network generated by respective Radio Base Station s 10A and 10B. The cellular communication network in question can in principle be of any known type, the situation considered being particularly significant in the case of 3G communication networks such as e.g. cellular networks operating according to the UMTS standard.

In the theoretical cell model, each cell is comprised of a geographical area where the field strength (i.e. the RF signal level) received from the Radio Base Station (RBS) associated with the cell is higher than the field strength likely to be received from any other Radio Base Station in the network, thus making the cell/RBS in question the "best server" in the area considered. Those of skill in the art are otherwise cognizant that the field strength/RF signal level is just one example of one of the operational parameters of the network that can render a given cell the "best server": in fact other parameters (e.g. a signal-to-interference ratio) may be taken into account for that purpose. Throughout this description reference will be made to field strength as the exemplary operational parameter considered for the sake of simplicity and to facilitate proper understanding of the invention

Measurements collected in-the-field may however indicate that, within the Best Server area B where a certain Radio Base Station (10B) is expected to be the "best server" (that is the Radio Base Station that offers the highest measured RF signal level) so-called islands may exist where, contrary to expectation, the highest measured RF signal level received is the one transmitted from another Radio Base Station (e.g. the Radio Base Station 10A).

For instance, figure 1 schematically represents a situation where three islands, namely A1, A2 and A3 exist within the best server area B where - in terms of measured RF signal level - the best server is not the Radio Base Station 10B but the Radio Base Station 10A.

Quite obviously, the representation of figure 1 is a deliberately simplified one: one needs to consider that a cellular communication network is typically comprised of a high number of Radio Base Station s in an arrangement where e.g., in addition to producing the best server A (the main and its own one), the Radio Base Station 10A produces the islands A1, A2 and A3 within another best server area such as B, the Radio Base Station 10A thus being an "interfering" Radio Base Station . The best server A may in turn be affected by islands created by other Radio Base Station s in the network (thus making the cell A an "interfered" cell).

The presence of islands of the type referred to in the foregoing may be highly detrimental to proper operation of a cellular communication network. Just to mention one example, mobile terminals served by the network and supporting a call in progress typically tend to stay connected to the network via the Radio Base Station that is the best received one. This may involve starting a so-called hand-over process to another cell whenever the "best server" condition is found to be no longer related to the Radio Base Station currently serving the mobile terminal.

In presence of islands, this typical mode of operation may result in an undesired high number of hand-over attempts or processes, most of which are likely to be prompted at very short time intervals when a mobile terminal is travelling through an area where a number of small-sized islands are present.

Despite the possibility for each Radio Base Station to be simultaneously both interfering and interfered, the capability of properly identifying islands and the Radio Base Station s producing them is quite helpful in taking proper steps in order to dispense with undesired situations. In fact, reducing the RF power emitted by a predominantly interfering Radio Base Station may be a much simpler and more advantageous solution than e.g. increasing the power emitted by a number of Radio Base Station s interfered thereby. In that respect, it will be appreciated that in cellular communication networks such as UMTS networks, the power emitted by a Radio Base Station ends up by being a source of interference for the neighbouring Radio Base Station s.

Up to now, the standard approach for evaluating the presence and dimensions of islands produced by interfering/interfered relationships between Radio Base Station s in a cellular communication network has been based on coverage simulation results calculated by means of propagation models and digital maps of the terrain.

The accuracy of that approach is limited by the theoretical and statistical nature of any mathematical model implemented and by the resolution of the digital terrain models for urban and suburban areas, and by the loss of consistency as the real environment evolves over time. In fact, especially in an urban area context, new islands may be created as a result of spot anomalies in the urban texture such as e.g. a new big building erected at such a position and with such a characteristic to reflect and channel electromagnetic field down a street or an open area.

Object and summary of the invention

The need is therefore felt for arrangements that may allow to exploit, as a reference basis in evaluating the associated best server area for each Radio Base Station in a cellular communication network, the real (measured) field strength levels in relevant places of the area served, thus avoiding all the inaccuracies inevitably resulting from simulations based upon theoretical propagation models and digital representations of the environment.
The object of the present invention is thus to satisfy such a need.
According to the present invention, that object is achieved by means of a method having the features set forth in the claims that follow. The invention also relates to a corresponding mobile telecommunication system, as well as a related computer program product, loadable in the memory of at least one computer and including software code portions in order to carry out the steps of the method of the invention when the product is run on a computer. As used herein, reference to such a computer program product is intended to be equivalent to reference to a computer-readable medium containing instructions for controlling a computer system in order to support the execution of the method of the invention. Reference to "at least one computer" is evidently intended to highlight the possibility for the present invention to be implemented in a distributed/ modular fashion.
The claims are an integral part of the disclosure of the invention provided herein.
A particularly preferred embodiment of the invention provides for detecting, in a best server area cell of a cellular communication network served by a given Radio Base Station, islands formed by at least one other Radio Base Station, wherein said at least one other Radio Base Station represents in said islands the best server in respect of at least a given operational parameter of the network, by:

- partitioning the area of said cellular communication network exposed to the presence of such islands in a plurality of elementary surfaces or pixels;
- measuring the value of said at least one parameter over said plurality of pixels, wherein for each said pixel either said given Radio Base Station or said at least one other Radio Base Station is the best server, and
- subjecting the pixels wherein said at least one other Radio Base Station is the best server to an aggregation process to produce aggregations representative of said islands.

Preferably, the aggregation process is aimed at outlining islands via describing parameters such as:

- the island surface resulting from the aggregation, whereby said islands are defined as aggregations including at least a given number of said pixels, and
- the distance between said pixels, whereby pixels separated by a distance lower or equal to a given distance are included in the same aggregation.

In a particularly preferred embodiment, the number of islands (n) produced by said at least one other Radio Base Station within said best server area produced by a given Radio Base Station is counted, and such counting is preferably performed for a plurality of said given Radio Base Station s in said network.
The number of islands produced by other Radio Base Station s in the respective areas covered by said plurality of given cells is counted, by highlighting in the count those islands having a distance to the Radio Base Station higher than a weighed average value and a surface higher than an average surface. The Radio Base Station s thus highlighted are attributed a likelihood of being interfering ones producing islands in best server areas of other Radio Base Station in the network.
A main advantage of the arrangement described therein lies in the recognition of the real situation in terms of areas where a specific Radio Base Station is actually the "best server" (e.g. the Radio Base Station assuring the highest RF signal level or the "best" value of any other operational parameter selected as an indication of the best server status), thus achieving the best possible accuracy in shaping the best server areas related to the said Radio Base Station.
A particularly preferred embodiment of the invention provides for a so-called report to be generated in respect of the islands in order to analyze fragmented best server areas within a given cell by processing a measurements collected in-the-field. These measurements can be collected e.g. by means of a scanner that is caused to travel over the area served by the network to detect (typically in terms of RF field strength) the actual field strength level in that area without having to pay any attention to any pre-set neighbouring relationship established when designing the network.
In brief, the arrangement described herein relies on the fact that a given Radio Base Station may turn out to be the best server in a first, more or less continuous and large area of coverage plus various, small distributed territory portions that are the so-called islands. These small areas may be quite variable in terms of number, size, distance from the Radio Base Station, distance with respect to other Radio Base Station, and best server field strength. These conditions as a whole identify whether some network configuration optimisation is be required.

In fact, a Radio Base Station being the best server in a number of a highly fractionated, relatively small islands typically identifies that Radio Base Station as one which is unduly interfering over the others, thus giving rise e.g. to the risk of a high probability of changes in the best server condition along the radio connection supporting a call or a data service (frequent handover or connection drops).

Brief description of the annexed drawings

The invention will now be described, by way of example only, by referring to the enclosed figures of drawing, wherein:

- figure 1 has been already described in the foregoing,
- figure 2 is a schematic representation of coverage recognition within the framework of the arrangement described herein,
- figures 3 to 6 are exemplary of histograms which can be generated in various exemplary embodiments of the arrangement described herein, and
- figure 7 is a flowchart exemplary of the steps involved in a typical embodiment of the arrangement described herein.

Detailed description of exemplary embodiments of the invention

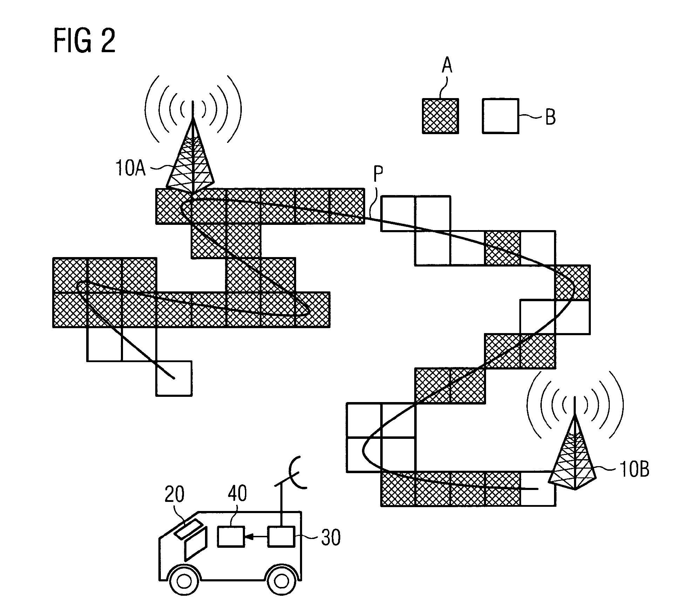

Figure 2 schematically represents a path P travelled over the area covered by a cellular communication network (of which only two of a plurality of Radio Base Stations 10A and 10B are shown) by a scanner device adapted to a measure e.g. the field strength received over the territory from the base stations 10A and 10B.

Such scanner devices 30, carried by a vehicle 20 and having associated processing equipment 40, are well known in the art and of common usage by any operator of cellular communication networks, thus making it unnecessary to provide a more detailed description herein.

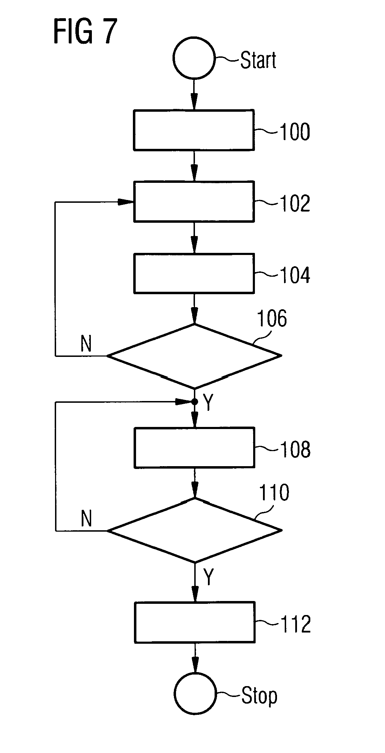

Collection of the field data strength by such a scanner corresponds to the first step 100 in the method exemplified by the flowchart of figure 7.

The territory, as subjected by analysis via the scanner 30 is partitioned in a number of "pixels", each of which may be represented in the form of e.g. an elementary square area of, say, 25x25 meters. This value (which must not be construed in a limiting sense of the scope of the invention) has been found by the applicant to represent a good compromise between the accuracy or "granularity" of the data collected (and thus of the results obtained) and the task related to collecting too many values in the field.

Specific situations may dictate to use smaller pixels (e.g. when a higher "granularity" and accuracy is desired) or larger pixels (e.g. in areas where collecting data may be difficult and the accuracy of the final results is not adversely affected by the lower detail of the data collected).

As better detailed in the following, the results of the measurement campaign represented by the step 100 in figure 7 provide for each and every pixel "scanned" an indication of the Radio Base Station which is perceived as the best server.

In the representation of figure 2 (which is deliberately simplified in order to facilitate understanding the underlying principles of the invention) only two possibilities are schematically represented for each pixel, namely:

- the best server Radio Base Station is the one designated 10A (hatched pixels), or
- the best server Radio Base Station is another one, namely the one designated 10B (white pixels).

The situation typically encountered on the field provides for the best server Radio Base Station being in fact selected out of three or more. However, even the simplified representation of figure 2 makes it possible to understand that the irregular radio coverage which leads to the formation of "islands" (such as those designated A1, A2, A3 in figure 1) derives from a given Radio Base Station being a best server in different areas that can be situated near or far from it.

In the arrangement described herein, the formation of the islands is analyzed by resorting to the "aggregation" of individual pixels. Such aggregation analysis makes it possible, e.g., to reliably predict that if a Radio Base Station is found to be the best server in a large number of relatively small areas, that Radio Base Station will expectedly be an interfering Radio Base Station.

Such an island analysis makes it possible to establish the Radio Base Station competence area borders without having to rely on the boundaries obtained (with a low degree of accuracy) from prediction calculations.

Turning now again to the flow-chart of figure 9, the pixel-per-pixel data collected on the field (essentially what Radio Base Station is the best server for each pixel) are subjected in a step 102 (figure 9) to aggregation processing in order to define islands.

Specifically, an "island" is defined as a set of pixels (for instance pixels A or pixels B, with reference to the schematic representation of figure 2) where a given Radio Base Station is measured as the best server that are aggregated (that is are considered as forming the same island) on the basis of certain rules regarding the island minimum surface and the distance among pixel forming the islands.

An island can be notionally comprised even of just a single pixel where a given Radio Base Station is measured as the best server surrounded by pixels where other Radio Base Stations are the best servers.

However, different criteria can be selectively adopted in defining an island.

For instance, the following rule/criterion can be adopted:

- surface = 1 pixel, distance = 1 pixel

This will mean that one island must contain at least one pixel and the distance between them, if more than one, can be up to one pixel.

Another exemplary criterion can be:

- surface = 2 pixels, distance = 2 pixels
  (meaning that one island must contain at least two pixel and the distance between them can be up to two pixels).

Such criteria correspond to different degrees of resolution/sensitivity.

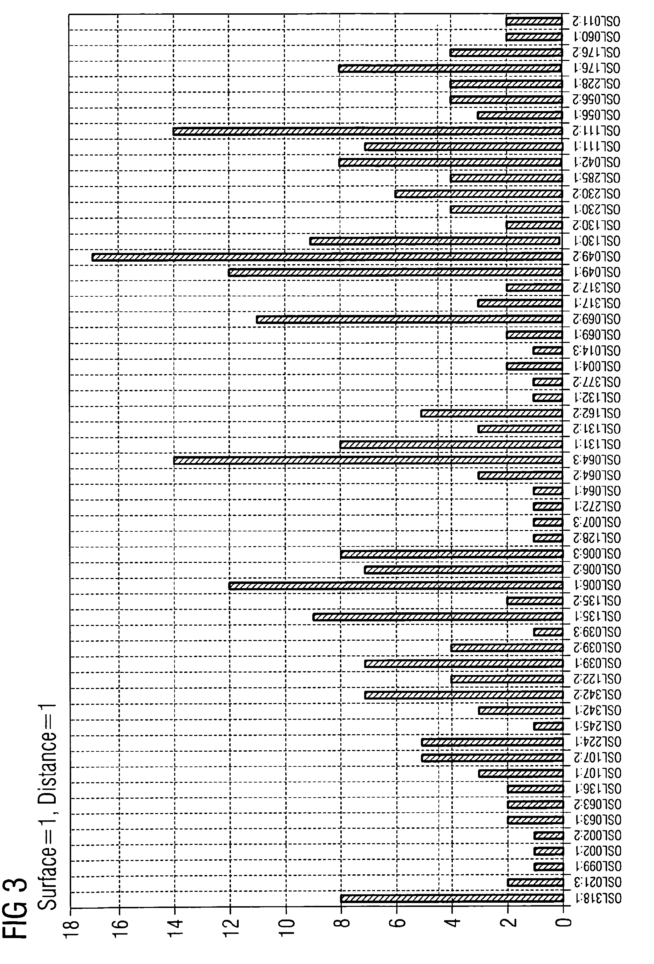

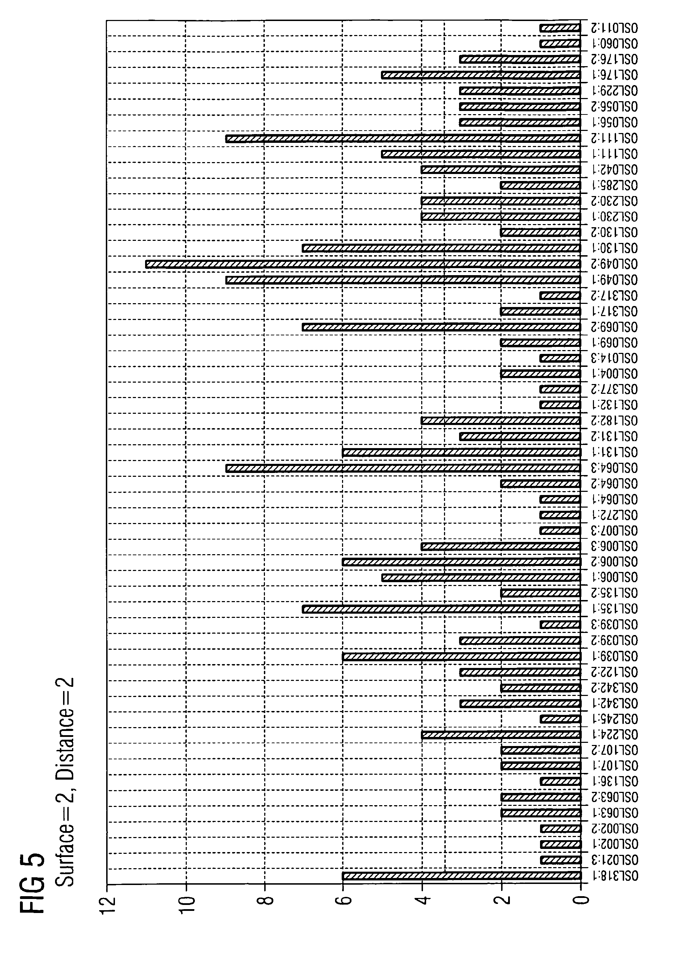

The histograms of figures 3 and 5 were produced by applying the two different criteria outlined in the foregoing to the same exemplary measured area.

In all of the two histograms considered, the abscissa scale is made up of names identifying a set of cells (associated to Radio Base Stations having the same name) in the network, while the ordinate scales indicate the number of islands where the same Radio Base Station was found (i.e. measured) to be the Best Server.

For instance, in the histograms of figures 3 and 5 the cell or Radio Base Station designated OSL049:2 is ostensibly the one generating (or associated to) the highest number of islands.

However the number of islands is equal to 17 and 11, respectively in the two figures, depending on the different criteria adapted for defining them: e.g. when the criterion (surface = 1, distance = 1) is adopted, the number of islands identified is higher than in the case the criterion (surface = 2, distance = 2). In fact, the islands identified in the former case are generally "smaller" (and higher in number) than those identified in the latter case.

Histograms as those shown in figures 3 and 5 represent a basic tool for analysing, for each base station (BS), factors such as, e.g.:

- BS area fragmentation, dimension and spatial distribution,
- BS coverage level and its separation from neighbours,
- whether a BS cell is mainly an interfering or interfered one, and/or
- whether a BS is exceeding its competence area (that is the related area defined as a target,in which to be the best server, in the network design).

Additionally, a comparison with composite simulation results can be performed.

In that respect, those Radio Base Stations that generate too high a number of islands (such as the RBS OSL049:2 in the histograms of figures 3 and 5) are strongly suspected of being "interfering" cells, namely cells that end up by being a source of nuisance for other RBSs. It will be appreciated that such interfered cells may not necessarily be neighbouring cells to the interfering ones. This phenomenon may be due to a number of factors (such as the horography of the area served by these RBSs or specific building arrangements). Consequently, the RBSs that give rise to a high number of islands are analysed with priority.

Following the step 102 where the number of islands generated by a given RBS are determined based on any of the rules defined in the foregoing (see once again the histograms of figures 3 and 5), in a step 104 a weighed distance $\underline{D}$ and an average surface $\underline{A}$ are calculated based on the following formulas:

$$\underline{D} = \frac{\sum A_i \cdot D_i}{\sum A_i}$$

$$\underline{A} = \frac{\Sigma A_i}{n}$$

where $D_i$ is the distance between the island and the site of the cell (i.e. the Radio Base Station serving the cell), $A_i$ is the island surface and n is the number of islands generated by the RBS.

In a selection step 106 those islands that have $D_i$ > (i.e. higher than) $\underline{D}$ and $A_i$ > (i.e. higher than) $\underline{A}$ are selected to be analysed with high priority.

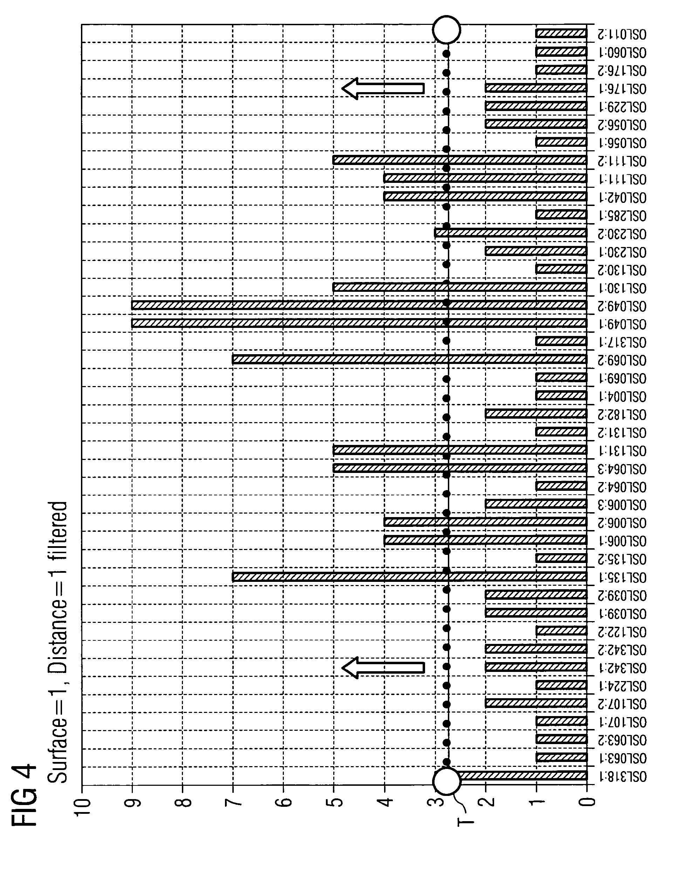

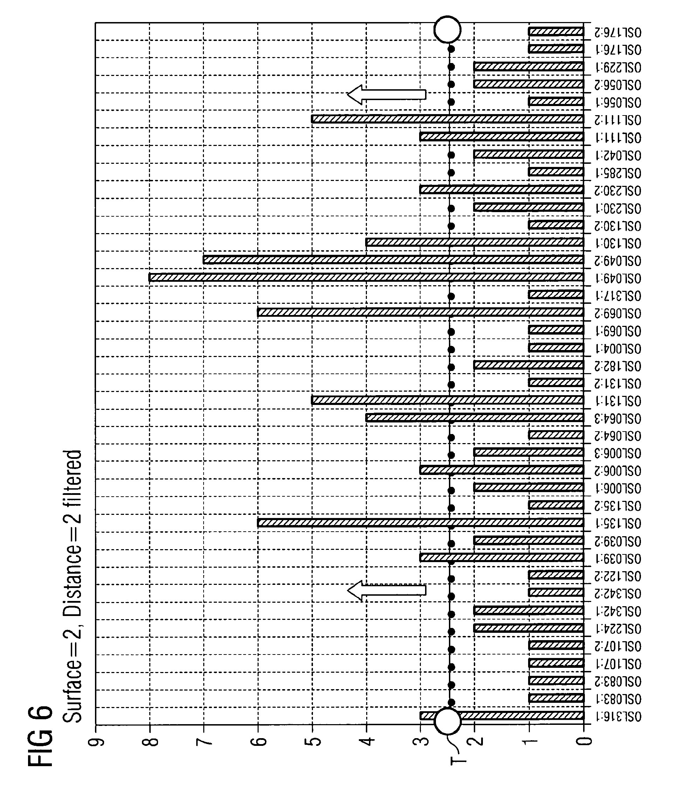

Such a selection step corresponds to the thresholding or "clipping" action depicted in the "filtered" histograms shown in figures 4 and 6, where the two inequalities in terms of distance $D_i$ and $A_i$ have been represented for simplicity as a single comparison against a threshold level T. This fact is intended to highlight that the two formulas for the average distance and the average surface only represent exemplary manners of performing a filtering action directed at highlighting those RBS that generate a number of islands higher then an "average" value.

Consequently, while corresponding to a presently preferred embodiment of the arrangement described herein, the formulas presented in the foregoing are in no way to be construed in a limiting sense of the scope of the invention.

The filtering or thresholding action highlighted in figures 4 and 6 (however performed) leads to extracting from histograms, such as the histograms of figure 3 and 5, the most "prominent" RBS in terms of the number of islands generated.

For instance, by referring - by way of example - to the histogram of figure 3, it will be noted that the RBSs designated OSL049:1 and OSL049:2 have a marked difference in terms of numbers of islands generated (12 versus 17). However, after filtering (see the histogram of figure 4) they exhibit the same number of islands (i.e. 9) that satisfy the thresholding criteria.

Those cells that satisfy the thresholding criteria represented by threshold T in the histograms of figures 4 and 6 (positive outcome of a selection step 106) are processed in a step 108 with the purpose of making their Radio Base Stations less "dangerous" in respect of coverage continuity assured by other Radio Base Station s.

Such processing may involve direct interventions (including interventions of a fully automated type) aimed at reducing the negative effect of a certain RBSs found to be markedly interfering with other RBSs.

Such interventions may include e.g. reducing the power emitted at the cell site or varying antenna parameters (e.g. antenna downtilt).

In a step 110, a check is made as to whether all the cells satisfying the threshold in criteria have been processed.

Once the step 110 yields a final result (indicating that all of these cells to be analysed with priority have been processed), in a step 112 same processing of the kind described in connection with the step 108 is performed concerning those cells that did not meet the thresholding criterion.

It will be appreciated that, in a simplified embodiment of the arrangement described herein, such "non-priority" cells may not be subjected to processing. In fact, these "non-priority" cells are more likely to be "interfered", rather than "interfering" Radio Base Station s, with the consequent expectation that those actions taken in respect of the "interfering" RBSs may actually cope with undesirable situation in respect of the interfered cells.

In possible alternative embodiments, the method described herein may be limited to collecting the data resulting from the processing step 102 in the form of a report arranged as schematically shown (by way of example only) by Table 1 reproduced below.

Table 1

| Cell | Prog Cell | Surface | DBm | Centroid X | Centroid Y | Distance |
|------|-----------|---------|-----|------------|------------|----------|
| PA62813 B:2 | 1 | 58 | -70 | 359462,5 | 4216363 | 580 |
| PA62813 B:2 | 2 | 8 | -81 | 359537,5 | 4216888 | 1008 |
| PA62813 B:2 | 3 | 4 | -98 | 358912,5 | 4216888 | 1339 |
| PA62813_B:3 | 1 | 19 | -84 | 360362,5 | 4216763 | 981 |
| PA62813 B:3 | 2 | 4 | -70 | 359837,5 | 4215863 | 66 |
| PA62813 B:3 | 3 | 3 | -104 | 362387,5 | 4217638 | 3063 |

The vertical listing (namely, the lines) in the table is devoted to the best server cells as measured during the measurement data collection in field. For each of these cells, a block is given (that describes the various best server areas islands) identified after a first section.

The horizontal structure (columns) has a portion that describes the i-th island of the j-th best server cell followed by a periodical structure of columns containing information as to the neighbouring cells. The information thus provided gives an exhaustive description of the environment around the i-th cell.

The exemplary embodiment referred to in the foregoing considers the field strength (RF power received) as the parameter that identifies a given cell as the best server over a given elementary surface or pixel adapted to be comprised in an island. However, the arrangement of the invention lends itself to detecting the presence, in the area covered by a cell in a cellular communication network, of islands where other cells in the network are perceived as the best server based on an operational parameter different from the field strength.

Consequently, without prejudice to the underlying principles of the invention, the details and the embodiments may vary, also significantly, with respect to what has been described, by way of example only, without departing from the scope of the present invention as defined by the claims that follow.

**Claims**

1. A method of detecting, in a given cell (B) of a cellular communication network served by a given Radio Base Station (10B), islands (A1, A2, A3) produced by at least one other Radio Base Station (10A), wherein said at least one other Radio Base Station (10A) represents in said islands (A1, A2, A3) the best server in respect of at least one given operational parameter of the network, the method including the steps of:

   - partitioning the area of said cellular communication network exposed to the existence of said islands (A1, A2, A3) in a plurality of elementary surfaces or pixels;
   - measuring (102) the value of said at least one operational parameter over said plurality of pixels, wherein for each said pixel either said given Radio Base Station (10B) or said at least one other Radio Base Station (10A) is the best server, and
   - subjecting the pixels wherein said at least one other Radio Base Station (10A) is the best server, to an aggregation process (102) to produce aggregations representative of said islands (A1, A2, A3).

2. The method of claim 1, **characterized in that** said given operational parameter of the network is the radio signal field strength.

3. The method of either of claims 1 or 2, **characterized in that** said aggregation process is based on at least one parameter selected out of:

   - the surface resulting from the aggregation, whereby said islands are defined as aggregations including at least a given number of said pixels, and
   - the distance between said pixels, whereby pixels separated by a distance lower or equal to a given value are included in the same aggregation.

4. The method of any of the previous claims, **characterized in that** it includes the step of counting the number of islands (n) produced by said at least one other Radio Base Station (10A) within said given cell (B).

5. The method of any of the previous claims, **characterized in that** it includes the step of counting, for a plurality of Radio Base Stations in said network, the numbers of islands (n) produced in cells other that the cell served thereby.

6. The method of claim 5, **characterized in that** it includes the step of subjecting said plurality of Radio Base Stations in said network to a thresholding action (T) to identify within said plurality Radio Base Stations likely to act as interfering Radio Base Stations producing islands in cells other that the cell served thereby.

7. The method of claim 6, **characterized in that** said thresholding action (T) includes selecting, in said counting, those islands having at least one of:

   - a distance ($D_i$) to the Radio Base Station that produces them higher than a weighed average value ($\underline{D}$), and
   - a surface ($A_i$) higher than an average surface ($\underline{A}$).

8. A system for detecting, in a given cell (B) of a cellular communication network served by a given Radio Base Station (10B), islands (A1, A2, A3) produced by at least one other Radio Base Station (10A), wherein said at least one other Radio Base Station (10A) represents in said islands (A1, A2, A3) the best server in respect of at least one given operational parameter of the network, the system including:

- a scanner device (30) adapted for travelling over the area of said cellular communication network exposed to the existence of said islands (A1, A2, A3) to measure the value of at least one parameter over a plurality of elementary surfaces or pixels in said area and generate information indicative of the value of said at least one parameter as measured, and
- a processing unit (40) fed with said information generated by said scanner device (30), said processing unit (40) configured for performing the steps of the method of any of claims 1 to 7.

9. A computer program product, loadable in the memory of at least one computer (40) and including software code portions for performing the steps of the method of any of claims 1 to 7.

# FIG 1

FIG 2

FIG 3

Surface=1, Distance=1

EP 1 727 381 A1

FIG 4

Surface=1, Distance=1 filtered

## FIG 5

Surface=2, Distance=2

# FIG 6

Surface=2, Distance=2 filtered

EP 1 727 381 A1

FIG 7

Start

100

102

104

106

N

Y

108

110

N

Y

112

Stop

## EUROPEAN SEARCH REPORT

Application Number

EP 05 42 5354

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | WO 02/13439 A (SCHEMA LTD; DAVIDOR, YUVAL; TANAY, AMOS) 14 February 2002 (2002-02-14)<br>* page 3, line 17 - line 26 *<br>* page 7, line 3 - line 14 *<br>* page 10, line 1 - line 26 *<br>* page 12, line 8 - line 16 *<br>* page 13, line 10 - line 14 *<br>* page 16, line 25 - page 17, line 3 *<br>* page 18, line 33 - page 19, line 2 *<br>* figures 2A,2B,4,5,7 *<br>----- | 1,8,9<br><br>2-7 | H04Q7/36 |
| Y | US 5 987 306 A (NILSEN ET AL)<br>16 November 1999 (1999-11-16)<br>* column 1, line 8 - line 10 *<br>* column 4, line 36 - line 43 *<br>* column 5, line 59 - column 6, line 3 *<br>* column 9, line 1 - line 36 *<br>* column 10, line 51 - line 60 *<br>* column 14, line 54 - column 15, line 30 *<br>* column 17, line 4 - line 21 *<br>* figures 1,5A,5B,5C,8B *<br>----- | 2-7 | |
| A | US 6 405 043 B1 (JENSEN ERIC H ET AL)<br>11 June 2002 (2002-06-11)<br>* abstract *<br>* column 1, line 8 - line 10 *<br>* column 3, line 20 - column 4, line 26 *<br>* column 7, line 27 - line 35 *<br>* column 8, line 3 - column 9, line 14 *<br>* column 12, line 26 - line 65 *<br>* figures 2,4 *<br>----- | 1-9 | |

TECHNICAL FIELDS SEARCHED (Int.Cl.7)

H04Q

-/--

The present search report has been drawn up for all claims

| Place of search | Date of completion of the search | Examiner |
|---|---|---|
| Munich | 21 October 2005 | Rosenauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 42 5354

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 00/36863 A (IPMOBILE INCORPORATED) 22 June 2000 (2000-06-22) * page 13, line 24 - line 33 * * page 22, line 15 - line 25 * * page 24, line 12 - line 33 * * figures 8-10 * ----- | 1,8,9 | |
| A | EP 1 154 661 A (SCOREBOARD, INC) 14 November 2001 (2001-11-14) * column 2, line 39 - column 4, line 43 * * column 9, line 10 - line 36 * * figures 4-6 * ----- | 1-9 | |
| A | STOECKL P ED - TELECOM FINLAND: "GSM/DCS 1800 COVERAGE MEASUREMENT SYSTEMS" PROCEEDINGS OF THE NORDIC SEMINAR ON DIGITAL MOBILE RADIO COMMUNICATIONS. HELSINKI, DEC. 1 - 3, 1992, HELSINKI, TELECOM FINLAND, FI, vol. SEMINAR 5, 1 December 1992 (1992-12-01), pages 323-330, XP000458669 * the whole document * ----- | 1-9 | TECHNICAL FIELDS SEARCHED (Int.Cl.7) |
| A | ROHDE&SCHWARZ: "Aquisition, analysis and visualization of data in coverage measurements" NEWS FROM ROHDE&SCHWARZ, [Online] March 2000 (2000-03), pages 29-32, XP002350510 Retrieved from the Internet: URL:http://www.rohde-schwarz.com/> [retrieved on 2005-10-20] * the whole document * ----- | 1-9 | |

The present search report has been drawn up for all claims

| Place of search | Date of completion of the search | Examiner |
|---|---|---|
| Munich | 21 October 2005 | Rosenauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 42 5354

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2005

| Patent document cited in search report | | Publication date | Patent family member(s) | | Publication date |
|---|---|---|---|---|---|
| WO 0213439 | A | 14-02-2002 | AU | 8006401 A | 18-02-2002 |
| | | | CA | 2418940 A1 | 14-02-2002 |
| | | | EP | 1317861 A2 | 11-06-2003 |
| | | | US | 2003129987 A1 | 10-07-2003 |
| | | | US | 6487414 B1 | 26-11-2002 |
| US 5987306 | A | 16-11-1999 | AT | 249131 T | 15-09-2003 |
| | | | AU | 2632395 A | 21-12-1995 |
| | | | DE | 69531689 D1 | 09-10-2003 |
| | | | DE | 69531689 T2 | 15-07-2004 |
| | | | EP | 0772946 A2 | 14-05-1997 |
| | | | NO | 942031 A | 04-12-1995 |
| | | | WO | 9533352 A2 | 07-12-1995 |
| US 6405043 | B1 | 11-06-2002 | US | 2002022479 A1 | 21-02-2002 |
| | | | US | 2002022480 A1 | 21-02-2002 |
| WO 0036863 | A | 22-06-2000 | AU | 2194700 A | 03-07-2000 |
| EP 1154661 | A | 14-11-2001 | AT | 301374 T | 15-08-2005 |
| | | | BR | 0004213 A | 02-01-2002 |
| | | | CA | 2325071 A1 | 10-11-2001 |
| | | | DE | 60021703 D1 | 08-09-2005 |
| | | | JP | 2001320320 A | 16-11-2001 |
| | | | US | 6606494 B1 | 12-08-2003 |

EPO FORM P0459

For more details about this annex : see Official Journal of the European Patent Office, No. 12/82